# EUROPÄISCHE PATENTSCHRIFT

(11) **EP 2 019 980 B1**
(45) Veröffentlichungstag und Bekanntmachung des Hinweises auf die Patenterteilung: **08.09.2010**
(21) Anmeldenummer: 07725114.8
(22) Anmeldetag: 11.05.2007
(51) Int. Cl.: G05B 19/42

(54) **MESSVORRICHTUNG FÜR SCHNELLE MESSUNGEN**
MEASURING APPARATUS FOR FAST MEASUREMENTS
DISPOSITIF DE MESURE POUR MESURES RAPIDES

(30) Priorität: 18.05.2006 DE 102006023292
(43) Veröffentlichungstag der Anmeldung: 04.02.2009
(73) Patentinhaber: Carl Mahr Holding GmbH, 37073 Göttingen (DE)
(72) Erfinder: STRACK, Peter, 54300 Chanteheux (FR); STOCKBURGER, Jens, 73092 Heiningen (DE); OSTRIC, Zoran, 73776 Altbach (DE)
(74) Vertreter: Rüger, Barthelt & Abel Patentanwälte
(86) Internationale Anmeldenummer: PCT/EP2007/004194
(87) Internationale Veröffentlichungsnummer: WO 2007/134733

(56) Entgegenhaltungen:
- DE-B4- 10 215 188
- US-A1- 2004 103 548

## Beschreibung

Die vorliegende Erfindung betrifft eine einfach bedienbare eindimensionale Längenmessvorrichtung, insbesondere ein Höhenmessgerät, und eine mehrdimensionale Koordinatenmessvorrichtung.

Derartige Messvorrichtungen werden bei der Vermessung der Abmessungen, der räumlichen Gestalt und dgl. eines Gegenstandes verwendet. So ist es bspw. bei der Herstellung mechanischer Teile erforderlich, zwischen verschiedenen Bearbeitungsschritten die Bearbeitungsgenauigkeit an einem Werkstück zu überprüfen. Dabei müssen ggf. im Einzelfall sehr viele Einzelmessungen oder sogar eine punktweise Vermessung von ganzen Oberflächenbereichen vorgenommen werden. Die Zeitdauer und der Aufwand einer Messung können hoch sein, insbesondere wenn ganze Serien von Werkstücken überprüft werden müssen.

Aus der DE 102 15 188 B4 ist ein digitales Höhenmessgerät mit einer Messsäule bekannt, an der ein Messschlitten höhenverstellbar gelagert ist, der einen Messkopf mit einem Tastelement zur Antastung eines Prüflings trägt. Zur Vertikalpositionierung des Messkopfs ist in dem Fuß der Messsäule ein Elektromotor angeordnet, der über eine Rutschkupplung eine Umlenkrolle mit konstantem Reibmoment antreibt, über der ein mit dem Messschlitten verbundenes Antriebsband vorgesehen ist. An dem Messschlitten ist ein Handgriff befestigt, um den Messschlitten bedarfsweise auch von Hand positionieren zu können.

Im Einsatz ist die Messsäule auf einer stabilen Messplatte aufgestellt, auf der ein Bediener den zu vermessenden Prüfling für die jeweils auszuführende Messfunktion geeignet positioniert. Soll bspw. eine obere Fläche vermessen werden, wird der Prüfling unterhalb des Messkopfs angeordnet. Danach betätigt der Bediener an dem Computer die zugehörige Messfunktionstaste, z.B. 'Ebene von oben antastenA, um diese Messfunktion auszulösen. Der Motor verfährt den Messschlitten gegen den zu messenden Punkt und beaufschlagt dort das Tastelement über die Rutschkupplung mit konstanter Messkraft. Die Höhenkoordinate des Messpunktes wird bezogen auf die als Referenz dienende Oberfläche der Messplatte gemessen und angezeigt.

Das Höhenmessgerät hat sich in der Praxis bewährt. Es ermöglicht einem Bediener, auf verhältnismäßig einfache Weise vielfältige Messfunktionen, wie bspw. die Vermessung einer Fläche, Bohrung oder Welle von oben bzw. von unten, auszuführen. Die Messfunktion wird durch einfachen Tastendruck oder über ein Auswahlmenü des Computers ausgewählt. Hierzu muss jedoch der Bediener seinen Blick und seine Aufmerksamkeit kurz von dem Werkstück abwenden, was den Arbeitsfluss stört.

Bei einer anderen Art von Höhenmessgeräten wird das Tastelement mittels eines mechanischen Drehrads oder eines sonstigen mechanischen oder elektronischen Steuerorgans auf die zu messende Fläche verfahren, bis das Tastelement mit dieser in Berührung kommt. Eine Antastung wird mittels eines Berührungssensors erfasst, woraufhin der Messwert übernommen und angezeigt wird. Ein Beispiel für ein Höhenmessgerät mit einem Berührungssignalsensor und zugehöriger Verarbeitungslogik ist der DE 35 41 043 A1 entnehmbar.

Durch den Berührungssignalsensor wird die Ausführung einer Messung erleichtert, jedoch die Komplexität des Höhenmessgerätes erhöht. Ferner ist eine Feinpositionierung des Tastelementes mit dem Steuerorgan ohne ausreichende Übung nicht einfach und wird bei mechanischen Steuerorganen, wie einer Handkurbel oder einem Drehrad, als umständlich empfunden. Bei der DE 35 410 43 A1 ist bspw. hierzu neben dem Drehrad ein zusätzlicher Drehknopf vorgesehen, der eine stark untersetzte Verfahrbewegung des Tastelementes ermöglicht. Eine Feinpositionierung in dieser Weise verlängert die Messdauer in erheblichem Maße. Außerdem können bestimmte Messfunktionen, wie die Vermessung einer Welle oder einer Bohrung, mit dieser Art eines Höhenmessgerätes nicht oder nicht so einfach ausgeführt werden.

US 2004/0103548 A1 beschreibt ein ähnliches Höhenmessgerät mit einem in vertikaler Richtung über eine Handkurbel manuell positionierbaren Schlitten, der einen Tastkopf trägt, und mit einem Mess- und Anzeigesystem, das eine von dem Tastkopf auf ein Werkstück ausgeübte Druckkraft und die Position des Tastkopfs erfasst. Bei einer Messung benutzt ein Bediener die Handkurbel, um den Tastkopf mit dem Werkstück in Berührung zu bringen und eine kontrollierte Druckkraft auf dieses auszuüben. Die Stärke, Richtung und Dauer der Druckkraft wird von dem Messsystem erfasst und auf einer Anzeige angezeigt. Weist die Druckkraft eine vorbestimmte Mindeststärke und eine verhältnismäßig kurze Dauer auf, wird der die Position des Tastkopf kennzeichnende Messwert übernommen und auf der Anzeige angezeigt. Wird die Druckkraft über eine längere Zeitdauer hinweg aufrechterhalten, schaltet das Messsystem automatisch in einen Betriebsmodus zur Vermessung einer Welle oder Bohrung um. Der Benutzer kann dann mittels der Kurbel die Stärke der Druckkraft kontrollieren und einen Bereich der Welle oder Bohrung scannen, um bspw. einen oberen oder unteren Umkehrpunkt zu bestimmen. Für die Betriebsmodusumschaltung wird ein Positionssensor und ein Druck- oder Kraftsensor eingesetzt.

Aus der Praxis sind auch Koordinatenmessvorrichtungen bekannt, bei denen der Tastkopf in zwei oder drei Raumrichtungen translatorisch verschiebbar ist oder sogar um ein oder mehrere Achsen verschwenkbar sein kann, vgl. bspw. DE 196 41 720 C2 mit weiteren Verweisen. Zur Durchführung von Messungen werden meist CNC-Steuerungen verwendet, was die Vorrichtungen kostspielig macht und im Einsatz fundierte Kenntnisse und Erfahrung des Bedieners voraussetzt.

Ausgehend davon ist es Aufgabe der vorliegenden Erfindung, eine ein- oder mehrdimensionale Koordinatenmessvorrichtung zu schaffen, die dem Bediener die Ausführung von Messungen entsprechend gewünschten Messfunktionen erleichtert. Insbesondere sollte eine gewünschte Messfunktion schnell, einfach und mit hoher Genauigkeit auszuführen sein. Dies vorzugsweise mit einfachen Mitteln.

Eine weitere Aufgabe der vorliegenden Erfindung ist es, eine Koordinatenmessvorrichtung mit einer Verarbeitungs- und Steuerungslogik zu schaffen, die dem Bediener ermöglicht, während der Durchführung einer Messung von der Positionierung bis zur Messwerterfassung seine ganze Aufmerksamkeit auf das Werkstück zu richten.

Diese Aufgabe wird durch die Messvorrichtung mit den Merkmalen des Patentanspruchs 1 gelöst.

Erfindungsgemäß ist eine Messvorrichtung zur Durchführung wenigstens eindimensionaler Koordinatenmessungen an einem Werkstück entsprechend einer von mehreren von einem Bediener gewünschten Messfunktionen geschaffen, die einen Grundkörper aufweist, an dem ein Messschlitten mit einem Tastkopf längs verfahrbar gelagert ist. Der Messschlitten kann von einem Bediener in der Nähe einer jeweils gewünschten Messposition positioniert werden. Außerdem ist eine Antriebseinrichtung mit einem Motor vorgesehen, der mit dem Messschlitten antriebsmäßig verbunden ist, um diesen motorisch zu verfahren. Ein Messsystem der erfindungsgemäßen Messvorrichtung erfasst die Bewegung des Tastkopfes und gibt ein hierfür kennzeichnendes Messsignal aus. Die Messvorrichtung weist eine Steuerungseinrichtung mit einer Verarbeitungseinrichtung auf, die dazu eingerichtet ist, die von dem Messsystem gelieferten Messsignale entgegenzunehmen und diese gemäß vorbestimmten logischen Regeln zu verarbeiten und auszuwerten, um einen die Position des Tastkopfes, bspw. die Höhenlage eines gemessenen Punktes, kennzeichnenden Messwert zu liefern.

Gemäß der Erfindung weisen die logischen Regeln ferner eine Entscheidungslogik auf, die dazu eingerichtet ist, allein anhand der von dem Messsystem gelieferten Messsignale, ohne irgendwelche zusätzlichen Erfassungsmittel, wie Berührungssensoren, eine von dem Bediener vorgenommene Positionierung automatisch zu erfassen und basierend darauf, ohne eine weitere Interaktion des Benutzers, insbesondere ohne eine Betätigung einer Taste oder dgl., eine bestimmte, von dem Bediener gewünschte Messfunktion automatisch zu erkennen und auszulösen. Hierfür analysiert die Entscheidungslogik die von einem Bediener durchgeführte Bewegung des Tastkopfes anhand der Messsignale, indem sie eine Verfahrgeschwindigkeit und Verfahrrichtung des Messschlittens erfasst und dadurch eine gerade stattfindende manuelle Positionierung des Messschlittens erkennt. Die Steuerungseinrichtung erkennt ferner anhand der Verfahrgeschwindigkeit und der Verfahrrichtung des Messschlittens die Beendigung einer Positionierung, woraufhin der Tastkopf motorisch in die entsprechende Messposition überführt wird. Schließlich erkennt die Steuerungseinrichtung aus den Messsignalen den Anfang einer Messfunktion und die Messrichtung. In anderen Worten wird eine von einem Bediener in eine bestimmte Richtung vorgenommene Positionierung als Wunsch des Bedieners, in dieser Richtung eine bestimmte Messung ausführen, interpretiert.

Im einfachsten Fall umfassen die Messfunktionen eine Antastung einer Ebene in einer möglichen Bewegungsrichtung des Tastkopfes. Bei einem Höhenmessgerät bspw. erkennt die Entscheidungslogik eine Abwärtsbewegung des Tastkopfes, um die Messfunktion "Antastung von oben" von der Messfunktion "Antastung von unten" zu unterscheiden. Zu weiteren möglichen Messfunktionen können eine Antastung einer Bohrung oder einer Welle entweder in einer Richtung oder in der entgegengesetzten Richtung längs der Bewegungsrichtung des Tastkopfes gehören.

Die in dieser Beschreibung verwendete Bezeichnung "Auslösung der Messfunktion" umfasst wenigstens eine Auslösung einer motorischen Antastung des Werkstücks, eine Einfrierung oder Übernahme eines aktuellen stabilen Messwertes, um diesen anschließend abspeichern, weiter verarbeiten und/oder anzeigen zu können. Vorzugsweise umfasst die Auslösung der Messfunktion ferner die Initiierung wenigstens eines der folgenden Vorgänge: Beaufschlagung des Tastkopfs mit konstanter Messkraft, Übernahme einer Reihe aufeinander folgender Messwerte, Abspeicherung, Verarbeitung und/oder Anzeige des Messwertes bzw. der Messwerte.

Die vorliegende Erfindung ermöglicht eine schnelle und einfache Durchführung einer Messung. Der Bediener kann den Tastkopf vorzugsweise von Hand schnell und präzise in der gewünschten Messlage positionieren. Schwer bedienbare Feinpositionierungsmittel sind nicht erforderlich. Der Bediener braucht keine Taste und kein sonstiges Steuerelement zu betätigen, um eine Messfunktion auszulösen. Dies übernimmt die erfindungsgemäße Verarbeitungsvorrichtung. Vorteilhafterweise kann der Bediener bei allen Messungen seine Aufmerksamkeit alleine bei dem Werkstück belassen und muss nur die Positionierung vornehmen, während die Verarbeitungsvorrichtung automatisch die zugehörigen Daten sammelt, verarbeitet, speichert und/oder anzeigt. Die Arbeitsgeschwindigkeit kann deutlich gesteigert und die Messzeitdauer wesentlich reduziert werden. Dies insbesondere, wenn eine Vielzahl von Punkten einer Fläche oder eine Vielzahl von Werkstücken zu überprüfen ist.

Gemäß der Erfindung wird die automatische Erkennung und Auslösung einer Messfunktion lediglich in Abhängigkeit von den die Bewegung oder Position des Tastkopfes kennzeichnenden Messsignalen, die von dem Messsystem geliefert werden, und daraus abgeleiteten Größen bewerkstelligt. Die verarbeitungsvorrichtung kann bspw. dazu eingerichtet sein, aus den Positionsmesssignalen des Tastkopfes mittels einfacher Rechenoperationen die Bewegungsrichtung, Bewegungsgeschwindigkeit, Bewegungsstrecke und/oder Bewegungsdauer zu bestimmen und auf diese Größen festgelegte Kriterien anzuwenden, um eine Messfunktion zu erkennen. Es sind keine gesonderten Erfassungsmittel, wie Berührungssensoren oder dgl., erforderlich.

In einer vorteilhaften Ausführungsform der vorliegenden Erfindung, die besonders einfache und wirksame Kriterien anwendet, weist die Entscheidungslogik eine Vergleicherlogik zum Vergleich der erfassten oder abgeleiteten Größen mit vorgegebenen Parameterwerten auf. Zu den Parameterwerten gehören minimale oder maximale Schwellenwerte für die zu überprüfenden Größen. So kann bspw. der Wunsch des Bedieners, eine Ebene in einer bestimmten Richtung anzutasten, automatisch erkannt werden, wenn der Tastkopf während einer minimalen Zeitdauer mit einer minimalen Verfahrgeschwindigkeit in die gleiche Richtung verfahren wird. Wird der Tastkopf angehalten, wird dies als abgeschlossene Positionierung interpretiert.

Die erfindungsgemäße Entscheidungslogik kann auch dazu eingerichtet sein, eine Antastung einer Bohrung oder einer Welle in einer bestimmten Richtung zu erkennen. Dies insbesondere, wenn in einer bevorzugten Ausführungsform zusätzlich eine motorische Antriebseinrichtung zum Verfahren des Messkopfs oder eine Messkrafterzeugungseinrichtung vorgesehen ist. Nach Erkennung einer vorgenommenen Tastkopfpositionierung kann die Entscheidungslogik die Antriebseinrichtung oder Messkrafterzeugungseinrichtung automatisch anweisen, den Tastkopf mit dem Werkstück in Berührung zu bringen und mit einer konstanten Messkraft zu beaufschlagen. Danach analysiert die Entscheidungslogik die Messsignalreihe weiter. Bei einem stabilen Signalwert stellt sie fest, dass es sich um eine Antastung auf eine Ebene handelt. Wenn sich jedoch bei gleich bleibender Fahrtrichtung die Verfahrgeschwindigkeit regelmäßig oder kontinuierlich reduziert, kann die Entscheidungslogik aus der Richtung der motorischen Ansteuerung und der Verfahrrichtung des Tastkopfs ableiten, ob es sich um eine Antastung in eine Bohrung oder auf eine Welle handelt. Die Entscheidungslogik aktiviert daraufhin der jeweiligen Messfunktion zugehörige Spitzenwertspeicher und schließt z.B. eine Maximum- bzw. Minimummessung an einer Bohrung oder Welle automatisch ab, sobald die aktuelle Position des Tastkopfs um einen minimalen Betrag von demjenigen des Spitzenwertspeichers abweicht und dazwischen eine Verfahrgeschwindigkeit von etwa null erkannt wurde. Der Minimum- bzw. Maximumwert kann ausgegeben werden.

In einer bevorzugten Ausführungsform der Erfindung ist die Entscheidungslogik parametrierbar. Die für die Vergleicherlogik benötigen Parameterwerte können vom Bediener vorgegeben werden. Damit ist eine Anpassung an die jeweiligen Betriebsbedingungen, insbesondere eine bestimmte Messart und ein jeweiliges Werkstück, bedarfsweise möglich. In einer vorteilhaften Realisierung werden dem Bediener zur Vereinfachung mehrere vordefinierte und optimierte Parametersätze zur Verfügung gestellt, unter denen er entsprechend seinen Arbeitsbedürfnissen auswählen kann. Es kann auch vorgesehen sein, dass der Bediener einzelne Parameterwerte beliebig selbst festlegen kann.

In einer vorteilhaften Weiterbildung ist die Verarbeitungseinrichtung dazu eingerichtet, die Parameterwerte in Abhängigkeit von einer oder mehreren bereits ausgeführten Messfunktionen automatisch anzupassen. Sind bspw. die Abstände zwischen den einzelnen Messobjekten groß, so können die Parameter 'minimale VerfahrgeschwindigkeitA und 'minimale Zeitdauer der VerfahrgeschwindigkeitA automatisch erhöht werden, um das Risiko einer Fehlinterpretation zu reduzieren. Bei kleinen Abständen werden diese Parameter automatisch verringert. Weitere Parameter, wie die maximale VerfahrgeschwindigkeitsänderungA können als Funktion zuvor gemessener Bohrungs- bzw. Wellendurchmesser automatisch angepasst werden. Die somit geschaffene selbstlernende, adaptive Verarbeitungsvorrichtung ermöglicht eine hohe Genauigkeit bei der automatischen Erkennung eines Messfunktionsbefehls bzw. -wunsches und kann die Ausführgeschwindigkeit der Messung noch weiter erhöhen.

In einer bevorzugten Ausführungsform der Erfindung weist die Entscheidungslogik auch eine Logik zur Erkennung einer auf Elastizität der Messvorrichtung zurückzuführenden kurzen Umkehr der Verfahrrichtung des Tastkopfes auf. Die Entscheidungslogik kann ferner bei sehr schnellen Änderungen der Bewegungsrichtung des Tastkopfes erkennen, dass es sich um Prellungen handelt, die durch den Aufprall des Tastkopfes auf das Werkstück verursacht sind. Derartige Vorkommnisse werden ignoriert. Die maximale Dauer und Länge der Bewegungsrichtungsumkehr können als Parameter vorgegeben und angepasst werden.

Ferner weist die Entscheidungslogik auch eine Logik zur Annullierung einer gerade stattfindenden Messfunktionserkennung sowie eine Logik zum Abbruch einer ausgelösten Messfunktion auf. Hierzu braucht der Bediener keine Taste zu drücken, sondern bspw. lediglich die Verfahrrichtung des Tastkopfs über einen minimalen Weg hinweg und mit einer minimalen Verfahrgeschwindigkeit zu ändern. Dies wird von der Entscheidungslogik als Annullierung bzw. Abbruch erkannt.

Die erfindungsgemäße Messvorrichtung ist vorzugsweise als Höhenmessgerät mit einer bspw. vertikalen Messsäule ausgebildet, an der ein Messschlitten höhenverstellbar gelagert und geführt ist, der den Tastkopf mit daran befestigtem Tastelement trägt. In einer Weiterbildung kann die erfindungsgemäße Messvorrichtung auch eine Koordinatenmesseinrichtung aufweisen, die zur Durchführung von Messungen in einem begrenzten zweidimensionalen oder dreidimensionalen Messraum dient. Dies insbesondere, wenn der Tastkopf vom Bediener von Hand entlang zwei oder drei zueinander senkrechter Achsen verfahrbar ist. Der Tastkopf kann auch um eine oder mehrere Achsen schwenkbar gelagert sein.

Der Tastkopf weist vorzugsweise ein taktiles Tastelement mit einer geeignet, bspw. kugelförmig gestalteten Tastspitze auf, die bei der Messung mit dem Werkstück in Berührung kommt. Für bestimmte Messungen und Werkstücke, bspw. wenn lediglich Ebenen abgetastet werden, kann auch ein berührungslos abtastendes, insbesondere optisches oder magnetisches oder kapazitives Tastelement vorgesehen sein.

In einer bevorzugten Ausführungsform weist die motorische Antriebseinrichtung, die mit dem Tastkopf antriebsmäßig verbunden ist, einen Elektromotor auf.

In dem Antriebsstrang zwischen der Antriebseinrichtung und dem Messkopf ist vorzugsweise eine Kupplungseinrichtung eingefügt, die dazu dient, bis zum Erreichen eines vorbestimmten Drehmomentes eine kraftschlüssige Verbindung zwischen der Antriebseinrichtung und dem Messkopf zu schaffen. Damit kann das Tastelement bei motorischer Antastung eines Werkstücks mit definierter Messkraft beaufschlagt werden. Geeignet kann eine Rutschkupplung sein, die ein konstantes und fein abgleichbares Reibmoment aufweist. Es können aber auch andere, bspw. magnetische Kupplungen, eingesetzt werden. Der Motor bildet gemeinsam mit der Kupplung eine zur Erzielung einer definierten konstanten Messkraft wirksame Messkrafterzeugungseinrichtung. Eine Messkrafterzeugungseinrichtung kann aber auch durch an dem Messschlitten oder Messkopf angreifende Federelemente, durch eine Kolben-Zylinder-Einheit oder durch andere geeignete Vorspannmittel gebildet sein.

Die erfindungsgemäße Verarbeitungsvorrichtung ist vorzugsweise Teil einer Steuerungseinrichtung zur Steuerung und Kontrolle des Messablaufs, die bspw. in Form eines Rechners oder Computers ausgebildet sein kann, der entweder direkt an der Messvorrichtung, bspw. an der Messsäule eines Höhenmessgerätes befestigt oder auch entfernt angeordnet und mit dem Messsystem über eine drahtgebundene oder drahtlose Kommunikationsverbindung verbunden sein kann. Die Steuerungseinrichtung weist Eingabemittel, bspw. Tastenfelder auf, die dem Bediener eine Eingabe von Befehlen oder Parametern ermöglichen. Vorzugsweise ist auch eine Taste oder ein sonstiges Aktivierungsmittel vorgesehen, das dem Bediener ermöglicht, die erfindungsgemäße Entscheidungslogik bedarfsweise zu aktivieren oder zu deaktivieren, um ihm auch eine herkömmliche Handhabung ohne automatische Messfunktionsbefehlserkennung zu ermöglichen. Ferner ist vorzugsweise auch eine Taste oder ein sonstiges Betätigungsmittel vorgesehen, mit dem der Bediener vorauswählen kann, dass die nachfolgende Messung eine Ebene oder eine Bohrung bzw. Welle betrifft. Bspw. können nach der Vorauswahl viele Bohrungen eines oder mehrerer Werkstücke nacheinander geprüft werden, ohne zwischen den Messungen eine Taste bedienen zu müssen.

Die Steuerungseinrichtung weist ferner Ausgabemittel zur Ausgabe von Informationen auf, zu denen die erfassten Messwerte sowie bspw. eine Kennung der gerade ausgeführten Messfunktion gehören. Die Ausgabe wird vorzugsweise in Abhängigkeit von der durch die Entscheidungslogik jeweils erkannten Messfunktion entsprechend angepasst. Es können weitere Daten, wie eingegebene Parameter- oder Werkstückkennzeichnungen oder dgl. ausgegeben werden. Vorzugsweise gehört zu den Ausgabemitteln auch eine optische, akustische oder sonstige Signalisierungseinrichtung, die dem Bediener bestimmte Betriebszustände insbesondere der Entscheidungslogik anzeigt. Eine derartige Signalisierungseinrichtung ist vorzugsweise im Blickfeld des Bedieners, z.B. an dem Messschlitten, vorzusehen.

Das erfindungsgemäße Verfahren und die erfindungsgemäße Verarbeitungsvorrichtung zur automatischen Erkennung eines Messfunktionsbefehls oder -wunsches des Bedieners in Folge einer von dem Bediener vorgenommenen Positionierung erhöht den Messkomfort und die Ausführgeschwindigkeit der Messung und reduziert Fehlbedienungen im wesentlichen Maße. Der Bediener braucht sein Augenmerk nicht mehr von dem Werkstück oder sonstigen Prüfling zu entfernen. Vorteilhafterweise kann die Entscheidungslogik implementiert werden, ohne die Herstellungskosten des Gerätes zu erhöhen. Die Entscheidungslogik ist vorzugsweise als Teil der zur Steuerung der Messvorrichtung vorgesehenen Firm- oder Software enthalten. Somit können auch bereits vorhandene Höhenmessgeräte oder Koordinatenmesseinrichtungen problemlos und schnell nachgerüstet werden. Eine Realisierung als Hardware ist jedoch ebenfalls möglich.

Weitere Einzelheiten vorteilhafter Ausführungsformen der Erfindung sind Gegenstand der Zeichnung, der Beschreibung oder Unteransprüche.

In der Zeichnung sind Ausführungsformen der Erfindung veranschaulicht. Es zeigen:
Fig. 1 ein Höhenmessgerät in vereinfachter perspektivischer Darstellung,
Fig. 2 das Höhenmessgerät nach Fig. 1 mit abgenommener Verkleidung und teilweise aufgeschnitten,
Fig. 3 ein vereinfachtes Blockschaltbild, das die Steuerungseinrichtung des Höhenmessgeräts nach Fig. 1 und Fig. 2 veranschaulicht,
Fig. 4 ein Flussdiagramm, das eine Ausführungsform einer erfindungsgemäßen Logik zur automatischen Messfunktionsbefehlserkennung veranschaulicht,
Fig. 5 ein Flussdiagramm der erfindungsgemäßen Logik zur automatischen Befehlserkennung bei einer Antastung einer Welle oder einer Bohrung und
Fig. 6 eine Ausführungsform eines Mehrkoordinatenmess- und -prüfgerätes gemäß der vorliegenden Erfindung in einer stark schematisierten prinziphaften Perspektivdarstellung.

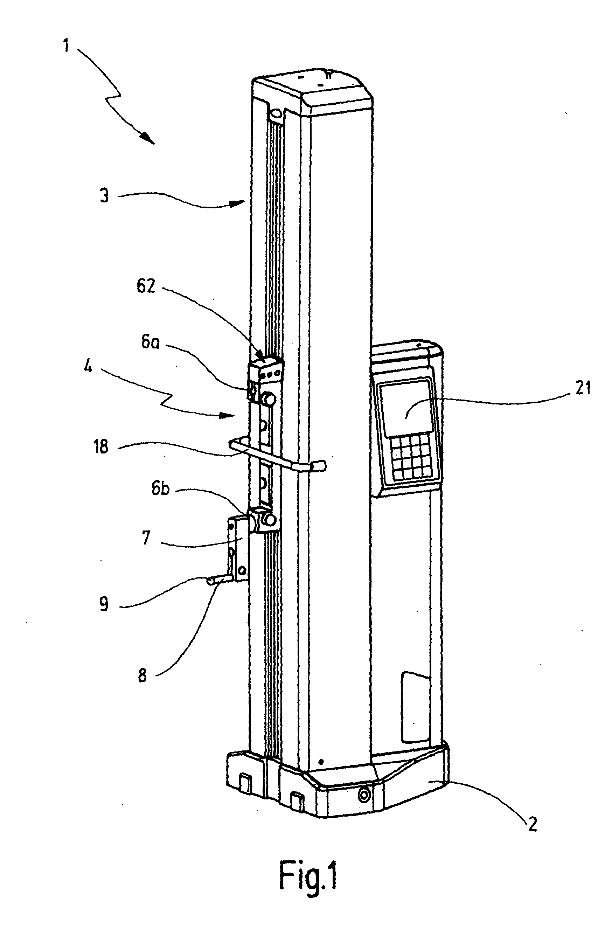

Fig. 1 veranschaulicht eine erfindungsgemäße Messvorrichtung in Form eines Höhenmessgerätes 1, das einen auf einer hier nicht näher dargestellten stabilen Messplatte aufgestellten Gerätefuß 2 aufweist. Der Gerätefuß 2 ist vorzugsweise über Gleit-, Wälz- oder Luftlager auf der Messplatte gelagert, um die Messvorrichtung 1 in horizontaler Richtung (x-y-Ebene) manuell bewegen und positionieren zu können. Von dem Gerätefuß 2 ragt eine Messsäule 3 in vertikaler Richtung nach oben, an der ein Messschlitten 4 gelagert und geführt ist. Der Messschlitten 4 weist an seinen jeweiligen Enden zwei Aufnahmen 6a, 6b für einen Messeinsatzträger auf. Im vorliegenden Fall ist ein Träger 7 mit einem Ende in der unteren Aufnahme 6b befestigt und trägt an seinem anderen, nach unten ragenden Ende einen Messkopf oder Messeinsatz 8, der hier in Form eines Taststiftes ausgebildet ist. Somit können in Abhängigkeit davon, in welcher der Aufnahmen 6a, 6b und in welcher Lage, d.h. nach oben oder nach unten ragend, der Träger 7 montiert ist, vier unterschiedliche Messbereiche erhalten werden können. Der Messkopf 8 weist eine kugelförmige Tastspitze 9 auf, die das eigentliche Tastelement bildet, mit dem ein Prüfling angetastet wird. Die Tastspitze 9 kann auch eine zylindrische, kegelförmige oder sonstige für die jeweilige Messung geeignete Form einnehmen.

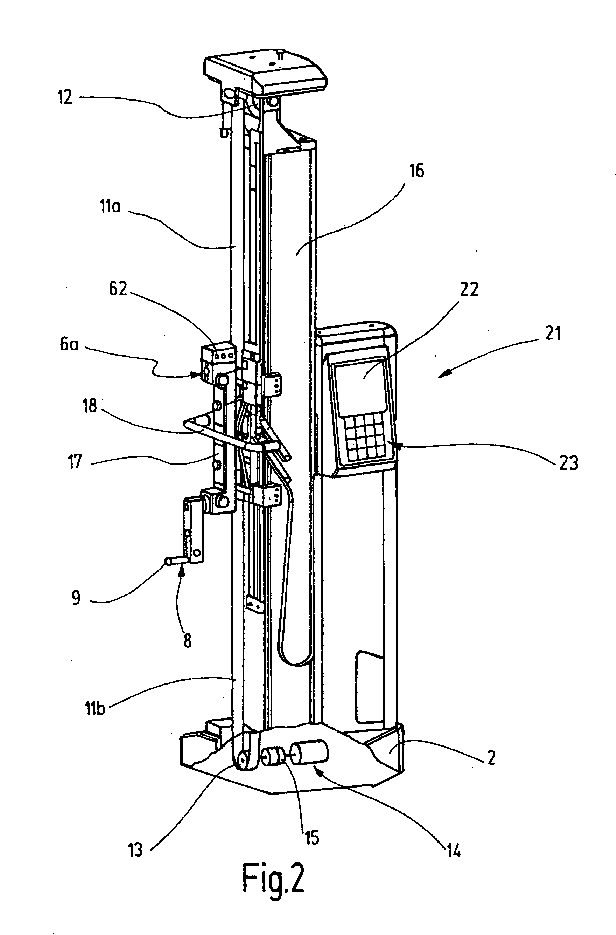

Der Messschlitten 4 ist vertikal positionierbar an der Messsäule 3 gelagert. Hierzu ist ein Antriebsband 11a, 11b vorgesehen, das sich, wie insbesondere aus Fig. 2 hervorgeht, von dem Messschlitten 4 vertikal nach oben bis zu einer Umlenkrolle 12, von dieser vertikal nach unten bis zu einer in dem Gerätefuß 2 vorgesehenen Antriebsrolle 13 und über diese hinaus als Antriebsband 11b zurück zu dem Messschlitten 4 erstreckt. In dem in Fig. 2 aufgebrochen dargestellten Gerätefuß ist ferner eine Antriebseinrichtung in Form eines Elektromotors 14 untergebracht, der über eine Kupplungseinrichtung 15 mit der Antriebsrolle 13 antriebsmäßig verbunden ist. Die Kupplungseinrichtung 15 ist vorzugsweise eine Rutschkupplung mit konstantem und fein abgleichbaren Reibmoment, die bei Antastung eines Prüflings eine Beaufschlagung des Tastelementes mit definierter konstanter Messkraft erzielt. Anstelle einer Rutschkupplung könnte auch eine sonstige hierzu geeignete Kupplung, bspw. eine Magnetkupplung, verwendet werden.

Zur Führung des Messschlittens ist unter der in Fig. 2 abgenommenen Verkleidung ein Führungskörper 16 vorgesehen, an dem der Messschlitten 4 entlangläuft. Dieser ist im Wesentlichen innerhalb der Verkleidung untergebracht, so dass lediglich ein länglicher, die Aufnahmen 6a und 6b aufweisender Aufnahmekörper 17 durch einen in der Verkleidung vorgesehenen Vertikalschlitz nach außen ragt. An dem Aufnahmekörper 17 ist ein Handgriff 18 angebracht, der eine Verstellung des Messschlittens 4 in der Höhe von Hand ermöglicht.

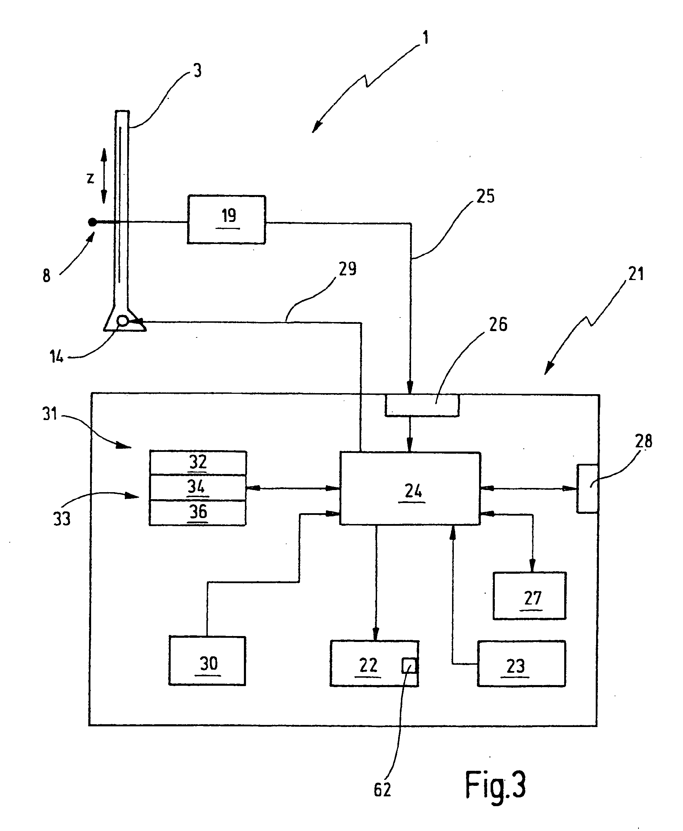

Zur Erfassung der Höhenlage des Tastelementes 9 in der z-Richtung ist ein geeignetes Messsystem 19 vorgesehen. Das Messsystem 19, wie es lediglich in Fig. 3 symbolhaft dargestellt ist, ist vorzugsweise ein Längenmesssystem, das die Position des Messschlittens 4 erfasst und kontinuierlich analoge oder digitale Messsignale liefert, die diese Position kennzeichnen. Bevorzugterweise wird ein hoch auflösendes inkrementales Auflichtmesssystem 19 verwendet. Es sind jedoch auch andere aus dem Stand der Technik bekannte Messsysteme, die optisch, kapazitiv oder induktiv arbeiten können, geeignet. Für schwierige Umgebungsbedingungen sind relativ Schmutz unempfindliche Magnetmesssysteme von Vorteil. Die Position des Tastkopfs 8 könnte auch indirekt durch Erfassung der Drehstellung einer der Rollen 12, 13 oder der Antriebswelle des Motors 14 bestimmt werden.

Zur Entgegennahme und Verarbeitung der erfassten Messsignale sowie zur Steuerung und Kontrolle des Messablaufs ist auf der von dem Messkopf 8 abgewandten Seite der Messsäule 3 eine als Computer 21 ausgebildete Steuerungseinrichtung vorgesehen. Diese weist als Display 22 ausgebildete Ausgabemittel zur Anzeige von Informationen, insbesondere Messwerten, sowie in Form von einzelnen Tasten ausgebildete Eingabemittel 23 auf, über die ein Bediener manuell Befehle oder Daten in den Computer 21 eingeben kann. Die Steuerungseinrichtung 21 ist in Einzelheiten in Fig. 3 veranschaulicht. Dabei sind einzelne Funktionsblöcke der Steuerungseinrichtung 21 dargestellt. Die einzelnen Funktionsblöcke können in Hardware auf einer Schaltungsplatine und/oder in Soft- bzw. Firmware als Teil eines auf bspw. einem Mikroprozessor ablauffähigen Programms verwirklicht sein. Es versteht sich ferner, dass einzelne Funktionseinheiten Teil anderer, hier gesondert dargestellter Funktionsblöcke sein können. Sofern im Folgenden von logischen Regeln oder von einer Logik der Steuerungseinrichtung 21 die Rede ist, ist somit dadurch keine Beschränkung auf irgendeine bestimmte Realisierungsform beabsichtigt.

Wie in Fig. 3 veranschaulicht, weist die erfindungsgemäße Steuerungseinrichtung 21 eine Steuerungslogik 24 auf, die den Messablauf, die Verarbeitung der Messsignale, die Handhabung von Befehlen, Daten und Parametern und die Funktionsweise sonstiger Funktionseinheiten steuert. Die Steuerungslogik 24 über eine geeignete Kommunikationsverbindung 25 an das Messsystem 19 angeschlossen, um über eine Eingangsschnittstelle 26 die von dem Messsystem 19 ausgegebenen Messsignale 25 entgegenzunehmen. Ferner steht die Steuerungslogik 24 mit den Eingabemitteln 23, dem Display oder sonstigen Ausgabemitteln 22 und einer Speichereinrichtung 27 in Datenverbindung, in der Programme, Parameter, Messwerte und sonstige Daten gespeichert werden können. Darüber hinaus weist die Steuerungseinrichtung 21 eine Ausgangsschnittstelle 28 auf, über die die Steuerungslogik 24 mit einem entfernt befindlichen Computer oder dgl. verbunden werden kann. Über eine Ansteuerungsverbindung 29 steuert die Steuerungslogik 24 ferner den Elektromotor 14 an. Die Steuerungslogik 24 wird von einem Taktgeber 30 periodisch mit einem Taktsignal versorgt. Weitere, ggf. erforderliche Einrichtungen oder Mittel, wie bspw. eine Energieversorgung, sind in Fig. 3 der Einfachheit wegen weggelassen.

Wie aus Fig. 3 ferner hervorgeht, weist die Steuerungseinrichtung 21 eine Verarbeitungseinrichtung oder -logik 31 auf, die dazu dient, die von dem Messsystem 19 gelieferten Messsignale entgegenzunehmen, und die logische Regeln 32 aufweist, um diese Messsignale zu verarbeiten, auszuwerten und daraus einen die Position des Tastkopfes kennzeichnenden Messwert zu bestimmen. Die Aufarbeitungslogik 32 kann dazu dienen, ggf. von dem Messsystem 19 gelieferte analoge Signale in digitale oder digitale Signale in eine zur Verarbeitung geeignete Form zu wandeln, zu filtern und zu überwachen, Stabilitätskriterien auf einen Messwert anzuwenden, einen Abstand zwischen Messpunkten oder ein Maximum, Minimum, einen Mittelpunkt oder Durchmesser einer Welle oder Bohrung zu bestimmen und die bestimmten Messwerte oder Daten zu übernehmen bzw. an andere Einheiten zu übergeben.

Das insoweit beschriebene Höhenmessgerät 1 funktioniert im normalen Betriebsmodus wie folgt:

Es wird bspw. angenommen, dass ein Bediener die Messfunktion der Antastung auf eine Ebene eines Werkstücks von oben ausführen will. Hierzu platziert der Bediener das Werkstück derart auf der Messplatte, dass sich das Tastelement 9 an der gewünschten Position oberhalb des zu messenden Punktes befindet. Anschließend verfährt der Benutzer den Messschlitten 4 vertikal nach unten, um den Tastkopf zu positionieren.

Danach betätigt der Bediener die zugehörige Messfunktionstaste oder Messtasten des Tastenfeldes 23, um der Steuerungseinrichtung 21 anzuzeigen, dass eine Ebene von oben anzutasten ist. Daraufhin steuert die Steuerungseinrichtung 21 den Motor 14 an, um den Tastkopf 8 mit der Messebene in Berührung zu bringen bzw. zu halten und das Tastelement 9 mit konstanter Messkraft zu beaufschlagen. Die von dem Messsystem 19 gelieferten Messsignale 25 werden durch die Aufarbeitungslogik 32 geeignet verarbeitet, um einen die Höhenkoordinate des Messpunktes anzeigenden stabilen Messwert zu bestimmen, der übernommen, auf dem Display 22 angezeigt und bspw. in der Speichereinrichtung 27 abgespeichert wird. Nach der Messwertübernahme kann der Messschlitten 4 wieder vertikal nach oben verschoben, das Werkstück in eine weitere Position überführt und ein weiterer Messvorgang durchgeführt werden.

Will der Bediener bspw. einen tiefsten Punkt (ein Minimum) einer Bohrung bestimmen, positioniert er das Tastelement 8 außermittig über dem zu messenden Bohrungsausschnitt, also seitlich versetzt in Bezug auf das Minimum, und betätigt das oder die zugehörigen Eingabemittel 23, um diese Messfunktion auszulösen. Bei der Ausführung der Messfunktion muss das Tastelement 9 ein- oder mehrfach über das Minimum gefahren werden. Hierzu bewegt der Bediener entweder das Werkstück oder das Höhenmessgerät in horizontaler Richtung. Die Aufarbeitungslogik 31 ermittelt die zugehörigen Messwerte und bestimmt daraus die Höhenkoordinate des Minimums. In gleicher Weise können auch andere Messfunktionen, wie bspw. die Vermessung eines oberen Bohrungsausschnitts, die Antastung einer Welle von oben oder von unten, die Bestimmung des Durchmessers und der Mitte einer Welle oder einer Bohrung, die Berechnung eines Abstands zwischen zwei Flächen, etc., jeweils durch Positionierung des Tastelementes 9 in Bezug auf das Werkstück und Betätigung der zugehörigen Eingabemittel 23 ausgelöst und ausgeführt werden.

Die erfindungsgemäße Steuerungseinrichtung 21 weist auch einen erweiterten Betriebsmodus auf, der eine mehr automatisierte und schnellere Ausführung von Messungen ermöglicht. Hierzu enthalten die logischen Regeln der Verarbeitungseinrichtung 31 eine Entscheidungslogik 33, die dazu eingerichtet ist, eine von dem Bediener vorgenommene Positionierung automatisch zu erfassen, die von dem Bediener jeweils gewünschte Messfunktion automatisch zu erkennen und diese auszulösen. Die Erkennung wird allein anhand der von dem Messsystem 19 gelieferten Messsignale 25 bewerkstelligt, ohne dass zu diesem Zweck zusätzliche Sensoren oder dgl. benötigt werden.

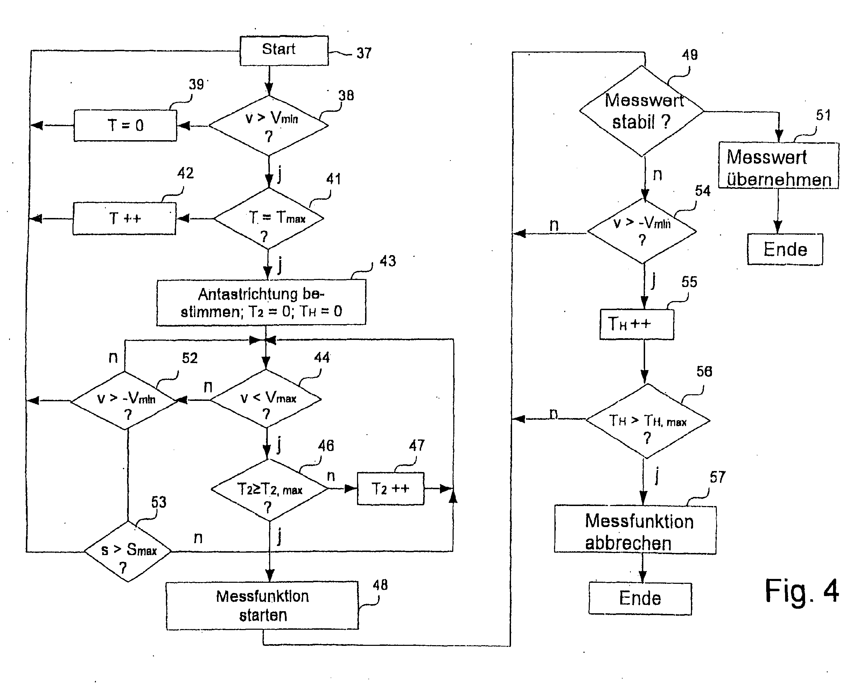

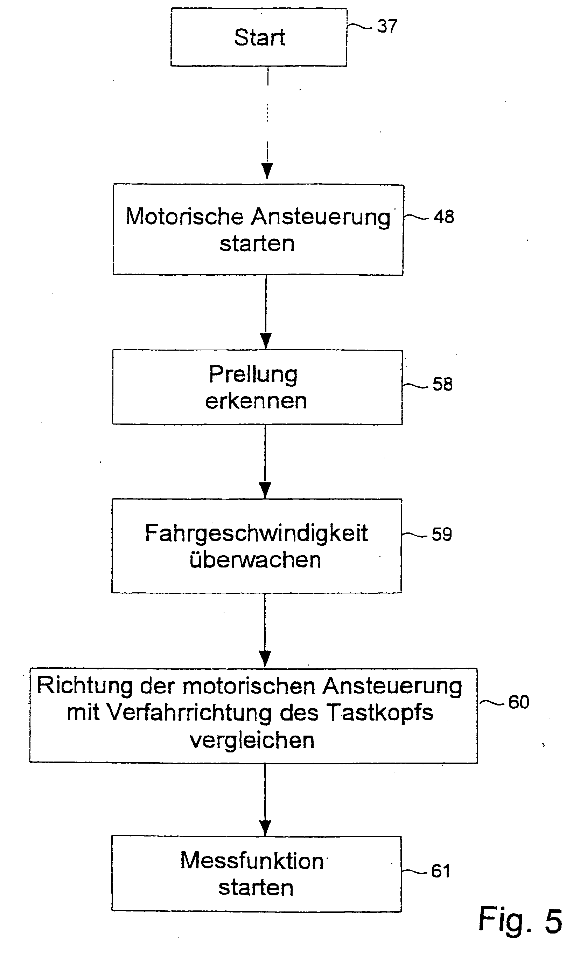

Im Einzelnen weist die Aufarbeitungslogik 32 der Verarbeitungseinrichtung 31 logische Regeln auf, die dazu dienen, aus den von dem Messsystem 19 gelieferten Messsignalen 25 weitere relevante Größen zu bestimmen. Zu diesen Größen gehören wenigstens entweder die Verfahrgeschwindigkeit, Verfahrrichtung, Verfahrdauer und/oder Verfahrbeschleunigung des Messschlittens 4. Diese Größen werden von der Entscheidungslogik 33 analysiert, um den Wunsch des Bedieners, eine bestimmte Messfunktion auszulösen, automatisch zu erkennen. Die Entscheidungslogik 33 weist in der bevorzugten Ausführungsform eine Vergleicherlogik 34, die die von der Aufarbeitungslogik 32 ermittelten Größen mit vorgegebenen Parameterwerten vergleicht, und festgelegte Kriterienregeln 36 auf, die auf die ermittelten Größen angewandt werden. Einzelheiten der Entscheidungslogik 33 sind nachfolgend anhand der in den Figuren 4 und 5 dargestellten Flussdiagramme erläutert, die den Ablauf einer automatischen Erkennung eines Befehls oder Wunsches eines Bedieners zur Auslösung einer Antastung einer Ebene oder einer Bohrung bzw. Welle in einer bestimmten Richtung verdeutlichen.

Fig. 4 veranschaulicht den Ablauf einer Messung bei der Antastung einer Ebene. Im Block 37 wird der Messablauf gestartet, indem der Bediener das Werkstück auf der Grundplatte in der geeigneten Messposition platziert und den Messschlitten 4 auf die Messebene zu verfährt. In Block 38 vergleicht die Vergleicherlogik 34 die von der Aufarbeitungslogik 32 bestimmte Verfahrgeschwindigkeit v mit einem ersten Parameter Vₘᵢₙ, der eine minimale Verfahrgeschwindigkeit kennzeichnet. Falls die minimale Verfahrgeschwindigkeit Vₘᵢₙ nicht überschritten ist, wird in Block 39 ein Zeitzähler T gleich null gesetzt und die Verfahrgeschwindigkeit weiterhin überwacht. Bei Überschreitung der minimalen Verfahrgeschwindigkeit Vₘᵢₙ wird in Block 41 der Zeitzähler T mit einem Grenzwert Tₘₐₓ verglichen. Falls Tₘₐₓ nicht erreicht ist, wird in Block 42 der Zeitzähler T inkrementiert, und die Verarbeitung kehrt zum Block 38 zurück. Andernfalls, falls T = Tₘₐₓ, also der Messschlitten 4 mit einer minimalen Verfahrgeschwindigkeit während einer minimalen Verfahrdauer bewegt worden ist, wird eine Positionierung des Messschlittens 4 erkannt. Daraufhin wird in Block 43 aus den Messwerten die Antastrichtung, z.B. die Richtung nach oben bzw. nach unten, bestimmt, und es werden weitere Zeitzähler T₂ und T_{H} zu null initialisiert.

Anschließend ermittelt die Entscheidungslogik 33, ob der Positioniervorgang beendet, der Messschlitten also angehalten worden ist. Hierzu wird in Block 44 die Verfahrgeschwindigkeit v mit einem eine Stillstandsgeschwindigkeit kennzeichnenden Parameter Vₘₐₓ verglichen, und falls v < Vₘₐₓ gilt, in Block 46 überprüft, ob eine minimale Zeitdauer des Stillstands des Schlittens 4 erreicht ist (T₂ ≥ T_{2,max}?). Falls dies nicht der Fall ist, wird der Zeitzähler T₂ in Block 47 inkrementiert und die Stillstandsgeschwindigkeit weiterhin überwacht. Falls der Grenzwert T_{2,max} erreicht ist, wird die Messfunktion in Block 48 ausgelöst, indem die Steuerungseinrichtung 21 über den Elektromotor 14 das Tastelement 9 mit der Messebene in Berührung bringt und es mit konstanter Messkraft beaufschlagt, um den aktuellen Messwert zu ermitteln. Sobald der Messwert ausreichend stabil ist, er sich also, wie in Block 49 festgestellt wird, nicht mehr wesentlich ändert, wird in Block 51 der Messwert übernommen, gespeichert und auf einer an die Messfunktion angepassten Anzeige des Displays 22 angezeigt. Die Routine kehrt dann zum Startblock 37 zurück, um mit der Erkennung einer nachfolgenden Positionierung des Messschlittens 4 fortzufahren.

Der Bediener kann aufeinander folgend eine Ebene an mehreren Punkten vermessen, indem er den Messschlitten 4 von Hand an den jeweiligen Messpunkten positioniert, woraufhin die erfindungsgemäße Entscheidungslogik 33 automatisch die zugehörige Messfunktion erkennt und zur Ausführung bringt. Der Bediener braucht sein Augenmerk nicht von dem Prüfling zu entfernen, so dass sein Arbeitsfluss nicht unterbrochen wird. Die automatische Erkennung erhöht den Messkomfort und die Ausführgeschwindigkeit der Messung und reduziert Fehlbedienungen.

Der Bediener kann jederzeit eine Befehlserkennung, also die Erkennung einer Positionierung vor der Messfunktionsauslösung, annullieren, ohne hierzu eine Taste des Computers 21 betätigen zu müssen. Hierzu bewegt der Bediener den Messschlitten 4 in die der Antastrichtung entgegengesetzte Richtung von Hand über eine ausreichende Strecke hinweg, was durch die Entscheidungslogik 33 in Form der Blöcke 52 und 53 als Annullierung des Befehls bewertet wird. Im Einzelnen überprüft die Entscheidungslogik 33 in Block 52, ob der Betrag der Geschwindigkeit in der entgegengesetzten Richtung größer ist als die minimale Geschwindigkeit Vₘᵢₙ, also ob v < -Vₘᵢₙ. Ist dies nicht der Fall, so kehrt die Schleife zum Block 44 zurück, um die Stillstandsgeschwindigkeit zu überwachen. Andernfalls wird der Verfahrweg s in der der Antastung entgegengesetzten Richtung mit einem Grenzwert Sₘₐₓ verglichen (Block 53), um festzustellen, ob es sich lediglich um eine kurze Umkehr oder um eine längere Umkehr der Fahrtrichtung des Messschlittens 4 handelt. Eine kurze Richtungsumkehr ist aufgrund der Elastizität der Rutschkupplung und Mechanik des Höhenmessgerätes 1, die eine gewisse Hysterese aufweisen, möglich und führt nicht zur Annullierung der Befehlserkennung. Bei der Erkennung einer längeren Richtungsumkehrung, wenn s > Sₘₐₓ, wird die Befehlserkennung jedoch annulliert, und die Prozedur kehrt, wie in Fig. 4 veranschaulicht, zum Startschritt 37 zurück.

Wenn die Messfunktion bereits ausgelöst worden ist, kann diese auf die gleiche Weise durch Umkehrung der Fahrtrichtung des Messschlittens 4 von Hand ohne einen Tastendruck abgebrochen werden. Es kann grundsätzlich die gleiche Logik wie bei der Annullierung der Messfunktionserkennung angewandt werden. Bei einem modifizierten Kriterium, das in Fig. 4 veranschaulicht ist, ist zum Abbruch einer Messung eine minimale Verfahrgeschwindigkeit in der der Antastrichtung entgegengesetzten Richtung (v < -Vₘᵢₙ in Block 54) während eines minimalen Zeitbereichs (Tₕ > T_{H, max} in Block 56) notwendig. Der Hysteresiszeitzähler wird in Block 55 periodisch inkrementiert. Falls beide Bedingungen 54 und 56 erfüllt sind, wird in Block 57 die ausgelöste Messfunktion abgebrochen.

Die erfindungsgemäße Entscheidungslogik ermöglicht auch eine automatische Befehlserkennung im Falle einer Antastung auf eine Welle oder in eine Bohrung. Ein Flussdiagramm hierzu ist in Fig. 5 veranschaulicht. Die anfängliche Bewegungsanalyse erfolgt wie bei der Erkennung einer Antastung auf eine Ebene, bis die motorische Ansteuerung gestartet wird (Block 48). Die Messreihe wird aber weiter entsprechend den folgenden Kriterien analysiert: Ändert sich die Bewegungsrichtung sehr schnell, so handelt es sich um Prellungen, die durch den Aufprall des Tastelementes 9 auf das Werkstück verursacht sind (Block 58). Diese Prellungen werden ignoriert. Reduziert sich bei gleichbleibender Fahrtrichtung die Fahrgeschwindigkeit regelmäßig, so handelt es sich um eine Antastung in eine Bohrung oder auf eine Welle (Block 59). Um welche Art der Antastung es sich handelt, kann aus der Richtung der motorischen Ansteuerung und der Verfahrrichtung des Messschlittens 4 abgeleitet werden (Block 60). Wenn die motorische Ansteuerung nach unten wirkt und die Verfahrrichtung des Messschlittens 4 derjenigen der Motorsteuerung entspricht, so handelt es sich um eine Bohrungsmessung. Wenn die Verfahrrichtung des Messschlittens 4 zu der Richtung der motorischen Ansteuerung entgegen gerichtet ist, so handelt es sich um eine Wellenmessung. Wenn die Richtung der motorischen Ansteuerung nach oben weist, so kehren sich die Kriterien um. In diesem Fall ist eine Wellenmessung erwünscht, wenn die Verfahrrichtung des Messkopfs derjenigen der Motorsteuerung entspricht.

Wenn die Entscheidungslogik 33 erkennt, dass der Benutzer eine Bohrungsmessung oder eine Wellenmessung in einer bestimmten Richtung, entweder nach oben oder nach unten, ausführt, werden die entsprechenden Spitzenwertspeicher der Speichereinrichtung 27 aktiviert, um die Messwerte aufzunehmen (Block 61). Die Messung wird abgeschlossen, wenn die aktuelle Position des Messschlittens 4 um einen minimalen Betrag von demjenigen des Spitzenwertspeichers abweicht und dazwischen eine Verfahrgeschwindigkeit von etwa null erkannt wurde. In diesem Fall kennzeichnet der in dem Spitzenwertspeicher abgelegte Messwert das Maximum bzw. Minimum der Bohrung bzw. Welle. Wenn die aktuelle Position des Wagens um einen großen Betrag von demjenigen des Spitzenwertspeichers abweicht, wird unabhängig von der Größe der Verfahrgeschwindigkeit die aktuelle Messung abgebrochen.

Gemäß der Erfindung sind die von der Vergleicherlogik 34 herangezogenen Schwellen- bzw. Grenzwerte vorzugsweise einstellbare Parameter, die in Abhängigkeit von den jeweiligen Messbedingungen geeignet vorgegeben werden können. Bspw. kann vorgesehen sein, dass der Bediener aus mehreren vordefinierten Parametersätzen entsprechend seinen Anforderungen auswählen kann. In einer bevorzugten Ausführungsform wurden folgende Parameterwerte für die erfindungsgemäße Entscheidungslogik 33 empirisch ermittelt: Die Zeitabstände zwischen zwei Messwerterfassungen sollten etwa 10 bis 50 ms betragen. Dann können bei einem Takt von 2 ms auch sehr langsame Bewegungen erfasst werden. Damit zufällige Stöße nicht gemessen werden, kann die minimale Verfahrgeschwindigkeit Vₘᵢₙ etwa 5 mm/s betragen. Zur Unterdrückung der Hysterese der Rutschkupplung und sonstiger Komponenten des Höhenmessgerätes wird eine kurze Umkehr der Fahrtrichtung bei einer maximalen Wegstrecke von Sₘₐₓ = 2 mm angenommen. Eine längere Umkehrung der Fahrtrichtung, durch die die Messfunktionserkennung annulliert wird, wird bei einer Verfahrstrecke von mindestens Sₘₐₓ = 50 mm erkannt. Die minimale Verfahrgeschwindigkeit Vₘᵢₙ für die Messfunktionsannullierung beträgt 50 mm/s. Prellungen werden erkannt, wenn die Bewegungsrichtungsänderungen weniger als etwa 280 ms andauern. Für die Erkennung einer Antastung in eine Bohrung oder auf eine Welle beträgt die maximale Verfahrgeschwindigkeit etwa 5 mm/s und die maximale Geschwindigkeitsänderung etwa 1 mm/s². Je nach Betriebsumgebung können sich die Parameter von den hier angegebenen beispielhaften Werten auch deutlich unterscheiden.

Es kann vorgesehen werden, dass zusätzlich zu vordefinierten und optimierten Parametersätzen, die zur Verfügung gestellt werden, der Bediener einzelne Parameter auch selbst über die Eingabemittel 23 beliebig eingeben kann. Ferner kann in einer Weiterbildung der Erfindung vorgesehen werden, dass die Steuerungseinrichtung 21 automatisch die Parameterwerte in Abhängigkeit von bereits ausgeführten Messfunktionen anpasst. Sind bspw. die Abstände zwischen den Messebenen groß, so können Vₘᵢₙ und Sₘₐₓ sowohl für eine kurze Fahrtrichtungsumkehr als auch für eine längere Fahrtrichtungsumkehr automatisch erhöht werden, um die Gefahr einer Fehlinterpretation noch weiter zu reduzieren. In Abhängigkeit von bereits zuvor gemessenen Bohrungs- und Wellendurchmessern können auch die zur Feststellung einer Prellung oder einer gleichmäßigen Fahrgeschwindigkeitsreduktion herangezogenen Parameter automatisch angepasst werden. Die Ausführgeschwindigkeit der Messung lässt sich dadurch noch weiter steigern.

Im Rahmen der Erfindung sind weitere Modifikationen und Weiterbildungen möglich. So kann bspw. ein Drehrad oder eine Handkurbel als manuelle Antriebseinrichtung vorgesehen sein. Es können auch sonstige aus dem Stand der Technik bekannte Steuerorgane für die Antastung verwendet werden. Die erfindungsgemäße Verfahrensweise, bei der der Messschlitten 4 vom Bediener von Hand positioniert und der Antriebsmotor 14 verwendet wird, um das Werkstück anzutasten und eine konstante Messkraft zu liefern, wird jedoch bevorzugt, weil sie eine schnelle und genaue Positionierung des Tastelementes 9 ermöglicht. Anstelle der Rutschkupplung 15 kann auch eine andere ähnlich wirkende Kupplung, bspw. eine Magnetkupplung, verwendet werden. Ebenfalls kann die Messkrafterzeugungseinrichtung 14, 15 durch ein Federsystem oder dgl. gebildet sein.

In einer vereinfachten Ausführungsform wird dem Bediener eine an dem Computer 21 oder vorzugsweise im Blickfeld des Bedieners bei der Messung auf der Messsäule 3 oder dem Messschlitten 4 vorgesehene Taste bereitgestellt, mit der er einmal auswählen kann, ob es sich bei der auszulösenden Funktion um eine Ebenenmessung oder um eine Bohrungs- bzw. Wellenmessung handelt. Eine Positionierung wird von der Steuerungseinrichtung 21 automatisch erkannt, die daraufhin die motorische Antastung einschaltet und die gewählte Messfunktion ausführt. Bei 2D-Messungen, bei denen aufeinander folgend viele Bohrungen oder Wellen nacheinander überprüft werden, können alle vermessen werden, ohne die Taste erneut betätigen zu müssen.

Eine weitere Ausgestaltung ist in Fig. 1 angedeutet. Hier ist eine zusätzliche Signalisierungseinrichtung 62 vorgesehen, die dem Bediener den Status der automatischen Befehlserkennung und Messfunktionsauslösung anzeigt. Hierzu können an der Messsäule 3 oder dem Messschlitten 4 LEDs vorgesehen sein, die bspw. anzeigen, dass gerade eine Positionierungserkennung stattfindet, eine Positionierung erkannt wurde oder ein Messwert übernommen worden und die Messung beendet ist. Selbstverständlich sind auch andere Realisierungen der Signalisierungseinrichtung, bspw. in Form einer einzelnen Leuchte, die an oder aus sein oder blinken kann, um den Status anzuzeigen, oder in Form einer akustischen Signalisierungseinrichtung möglich.

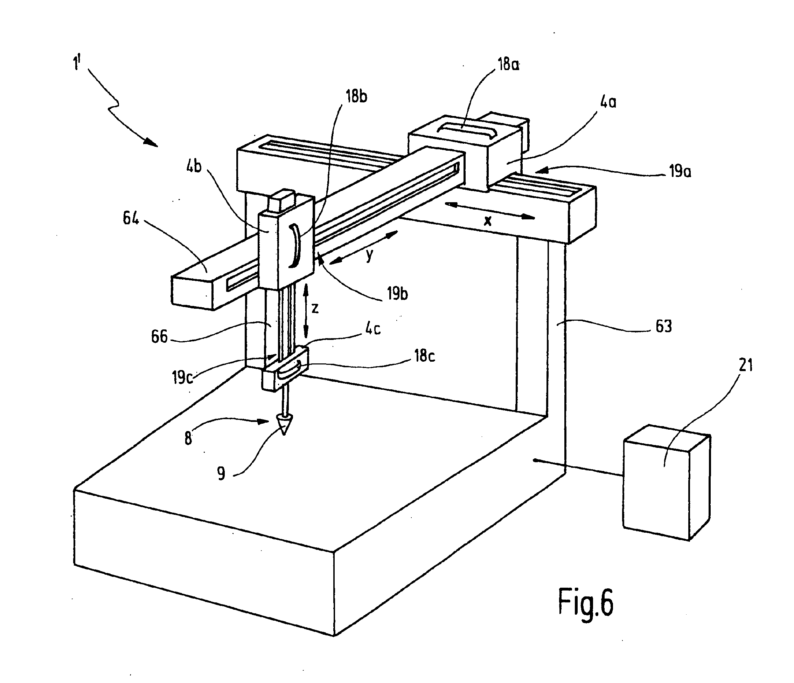

Das erfindungsgemäße Konzept einer automatischen Erkennung einer Positionierung und einer Messfunktion kann auch auf mehrdimensionale Messvorrichtungen angewandt werden. In Fig. 6 ist in einer stark vereinfachten Prinzipdarstellung eine dreidimensionale Koordinatenmessvorrichtung 1' veranschaulicht, die die Ausführung einer Messung in einem dreidimensionalen Raum ermöglicht. Hierzu ist an einem Portal 63 ein erster Messschlitten 4a in horizontaler x-Richtung verschiebbar gelagert und geführt. An dem Messschlitten 4a ist ein Handgriff 18a zur manuellen Verstellung vorgesehen. Ferner ist an dem Messschlitten 4a ein Tragarm 64 befestigt, der in einer zu der x-Richtung senkrechten horizontalen y-Richtung nach vorne ragt. An dem Tragarm 64 ist ein weiterer Messschlitten 4b in y-Richtung verschiebbar gelagert, wobei an dem Messschlitten 4b ein Handgriff 18b vorgesehen ist. Der Messschlitten 4b trägt ferner einen Führungskörper 66, der in einer zu der x-y-Ebene senkrechten z-Richtung verläuft und in dieser Richtung einen weiteren Messschlitten 4c führt. Der Messschlitten 4c weist einen Handgriff 18c auf und trägt an seinem unteren Ende ein Tastelement 9. Jedem Messschlitten 4a, 4b und 4c ist ein hier nicht näher veranschaulichtes Messsystem 19 zugeordnet, das die jeweilige x-, y- bzw. z-Position des Tastelemente 9 erfasst.

Ein Bediener kann über die Handgriffe 18a, 18b, 18c das Tastelement in eine beliebige Position innerhalb des Messraums überführen, wobei durch die erfindungsgemäße Steuerungseinrichtung 21 die Positionierung und die gewünschte Messfunktion erkannt sowie die Messfunktion ausgelöst wird, indem bspw. die Messwerte der Koordinaten übernommen und angezeigt werden. Hierbei kann bspw. festgelegt sein, dass die letzte Verfahrbewegung die Antastrichtung bestimmt. Statt oder zusätzlich zu der Linearverschiebung entlang der x-, y- und z-Achse kann auch eine Verschwenkung des Tastelementes 9 um wenigstens eine Schwenkachse vorgesehen sein.

Ein Höhenmessgerät 1 weist eine Messsäule 3 auf, an der ein vertikal verfahrbarer Messschlitten 4 sowohl von Hand als auch mittels eines Antriebsmotors 14 über eine Kupplungseinrichtung 15 bewegbar gelagert ist. Der Messschlitten 4 trägt einen Messtaster 8, der auf die Messstelle am Werkstück eine von dem Antriebsmotor 14 und der Kupplungseinrichtung 15 erzeugte konstante Messkraft ausübt. Ein Messsystem 19 erfasst die Höhenkoordinate des Messtasters 8 und übergibt sie an eine Steuerungseinrichtung 21 zur weiteren Verarbeitung und Auswertung.

Die Steuerungseinrichtung 21 weist eine Logik 33 zur Automatisierung des Messablaufs auf. Diese erfasst automatisch eine von dem Benutzer manuell vorgenommene Positionierung des Messtasters 8 in einer bestimmten Richtung, steuert daraufhin den Antriebsmotor 14 geeignet an, um die Antastung des Werkstücks zu bewirken, und bestimmt aus den Signalen des Messsystems 19 den oder die für die jeweilige Messung relevanten Messwerte. Die Steuerungseinrichtung 21 kann dazu eingerichtet sein, den Wunsch des Bedieners, entweder an einer Ebene oder in einer Bohrung oder auf einer Welle in einer Richtung oder in der entgegengesetzten Richtung zu messen, voll automatisch zu erkennen, um selbstständig die gewünschte Messfunktion auszulösen.

## Patentansprüche

1. Messvorrichtung zur Durchführung wenigstens eindimensionaler Koordinatenmessungen an einem Werkstück entsprechend einer von mehreren von einem Bediener wählbaren Messfunktionen
mit einem Grundkörper (3; 63, 64, 66) an dem ein Messschlitten mit einem Tastkopf (8) längs verfahrbar gelagert ist, wobei der Messschlitten (4) von einem Bediener manuell zu der jeweiligen Messposition hin verfahren werden kann,
mit einer Antriebseinrichtung (14), die einen Motor aufweist, der mit dem Messschlitten (4) antriebsmäßig verbunden ist, um diesen zu verfahren,
mit einem Messsystem (19) zur Erfassung der Bewegung des Tastkopfes (8) und zur Ausgabe hierfür kennzeichnender Messsignale (25) und
mit einer Steuerungseinrichtung (21) zur Steuerung eines Messablaufs und zur Ansteuerung der Antriebseinrichtung (14), wobei die Steuerungseinrichtung (21) eine Verarbeitungseinrichtung (31) aufweist, die dazu eingerichtet ist, die von dem Messsystem (19) gelieferten Messsignale (25) entgegenzunehmen und diese gemäß vorbestimmten logischen Regeln zu verarbeiten und auszuwerten, um einen die Position des Tastkopfs (8) kennzeichnenden Messwert zu liefern, wobei die logischen Regeln eine Entscheidungslogik (33) enthalten, die dazu dient,
aus den Messsignalen (25) eine Verfahrgeschwindigkeit (v) und eine Verfahrrichtung des Messschlittens (4) zu bestimmen, um daraus eine von dem Bediener gerade manuell vorgenommene Positionierung des Messschlittens (4) zu erkennen,
aus der Verfahrgeschwindigkeit (v) und der Verfahrrichtung des Messschlittens (4) die Beendigung einer manuellen Positionierung automatisch zu erfassen, um den Tastkopf motorisch in die erforderliche Messposition mit der Messebene in Berührung zu bringen, und
aus den Messsignalend (25) die von dem Bediener gewünschte Messfunktion zu erkennen und diese auszulösen.

2. Messvorrichtung nach Anspruch 1, **dadurch gekennzeichnet, dass** zu den Messfunktionen eine Antastung einer Ebene, einer Bohrung oder einer Welle entweder in einer Richtung oder in der entgegengesetzten Richtung längs der Bewegungsrichtung des Tastkopfes (8) gehören.

3. Messvorrichtung nach Anspruch 1, **dadurch gekennzeichnet, dass** die Auslösung der Messfunktion eine Auslösung einer motorischen Antastung des Werkstücks sowie eine Übernahme des aktuellen Messwertes umfasst und ferner die Initiierung wenigstens eines der folgenden Vorgänge umfassen kann: Beaufschlagung des Tastkopfs (8) mit konstanter Messkraft, Übernahme einer Reihe aufeinander folgender Messwerte, Abspeicherung, Verarbeitung und/oder Anzeige des Messwertes bzw. der Messwerte.

4. Messvorrichtung nach Anspruch 1, **dadurch gekennzeichnet, dass** die Entscheidungslogik (33) die automatische Erkennung und Auslösung einer Messfunktion in Abhängigkeit von den die Bewegung oder Position des Tastkopfes (8) kennzeichnenden Messsignalen (25) und daraus abgeleiteten Größen bewerkstelligt, zu denen wenigstens eine der Größen Bewegungsrichtung, Bewegungsgeschwindigkeit, Bewegungsstrecke und/oder Bewegungsdauer des Tastkopfes (8) gehören.

5. Messvorrichtung nach Anspruch 4, **dadurch gekennzeichnet, dass** die Entscheidungslogik (33) eine Vergleicherlogik (34) zum Vergleich der erfassten oder abgeleiteten Größen mit vorgegebenen Parameterwerten aufweist, zu denen minimale und maximale Schwellenwerte gehören.

6. Messvorrichtung nach Anspruch 5, **dadurch gekennzeichnet, dass** die Parameterwerte einstellbar sind.

7. Messvorrichtung nach Anspruch 5, **dadurch gekennzeichnet, dass** die Verarbeitungseinrichtung (31) dazu eingerichtet ist, die Parameterwerte in Abhängigkeit von wenigstens einer bereits ausgeführten Messfunktion automatisch anzupassen.

8. Messvorrichtung nach Anspruch 1, **dadurch gekennzeichnet, dass** die Entscheidungslogik (33) eine Logik umfasst, die dazu dient:
- die Geschwindigkeit (v), mit der der Tastkopf (8) verfahren wird, mit einem eine minimale Verfahrgeschwindigkeit kennzeichnenden ersten Schwellenwert (Vₘᵢₙ) zu vergleichen,
- die Zeitdauer (T) der Verfahrbewegung mit wenigstens einer minimalen Verfahrgeschwindigkeit zu erfassen und mit einem eine minimale Zeitdauer kennzeichnenden zweiten Schwellenwert (Tₘᵢₙ) zu vergleichen, und
- basierend auf dem Ergebnis der Vergleiche und der bestimmten Richtung, in der der Tastkopf (8) verfahren wird, eine Positionierung des Messkopfs zu erkennen und die geeignete Messfunktion, einschließlich der Messrichtung, auszuwählen und auszulösen.

9. Messvorrichtung nach Anspruch 8, **dadurch gekennzeichnet, dass** sie eine Messkrafterzeugungseinrichtung (14, 15) zur Beaufschlagung des Messkopfs (8) mit konstanter Messkraft aufweist und die Entscheidungslogik (33) ferner eine Logik umfasst, die dazu dient:
- eine kontinuierliche Reduktion der Verfahrgeschwindigkeit bei gleichbleibender Verfahrrichtung festzustellen,
- die bestimmte Verfahrrichtung des Tastkopfes (8) mit der Wirkungsrichtung der Messkrafterzeugungseinrichtung (14, 15) zu vergleichen und
- basierend darauf festzustellen, ob es sich um eine Antastung in eine Bohrung oder auf eine Welle handelt und in welcher Richtung die Antastung erfolgt.

10. Messvorrichtung nach Anspruch 1, **dadurch gekennzeichnet, dass** die Entscheidungslogik (33) eine Logik zur Erkennung einer auf Elastizität der Messvorrichtung (1) zurückzuführenden kurzen Umkehr der Verfahrrichtung des Tastkopfes (8) aufweist.

11. Messvorrichtung nach Anspruch 1, **dadurch gekennzeichnet, dass** die Entscheidungslogik (33) eine Logik zur Erkennung einer physikalisch bedingten Prellung des Tastkopfes (8) aufweist.

12. Messvorrichtung nach Anspruch 1, **dadurch gekennzeichnet, dass** die Entscheidungslogik (33) eine Logik zur Annullierung einer stattfindenden Messfunktionserkennung sowie eine Logik zum Abbruch einer ausgelösten Messfunktion aufweist.

13. Messvorrichtung nach Anspruch 1, **dadurch gekennzeichnet, dass** die Entscheidungslogik (33) vom Bediener aktivierbar und deaktivierbar ist.

14. Messvorrichtung nach Anspruch 1, **dadurch gekennzeichnet, dass** der Tastkopf (8) ein taktiles Tastelement (9) aufweist.

15. Messvorrichtung nach Anspruch 1, **dadurch gekennzeichnet, dass** der Tastkopf (8) ein berührungslos abtastendes Tastelement aufweist.

16. Messvorrichtung nach Anspruch 1, **dadurch gekennzeichnet, dass** der Messschlitten (4) ein Griffmittel (18; 18a, 18b, 18c) zum manuellen Verfahren des Tastkopfs (8) aufweist.

17. Messvorrichtung nach Anspruch 1, **dadurch gekennzeichnet, dass** die Antriebseinrichtung (14) einen Elektromotor aufweist.

18. Messvorrichtung nach Anspruch 1 oder 18, **dadurch gekennzeichnet, dass** eine Kupplungseinrichtung (15) in dem Antriebsstrang zwischen der Antriebseinrichtung (14) und dem Tastkopf (8) vorgesehen ist, um bis zum Erreichen eines vorbestimmten Drehmomentes eine kraftschlüssige Verbindung zwischen diesen zu schaffen.

19. Messvorrichtung nach Anspruch 18, **dadurch gekennzeichnet, dass** die Kupplungseinrichtung (14) durch eine Rutschkupplung gebildet ist.

20. Messvorrichtung nach Anspruch 1, **dadurch gekennzeichnet, dass** sie eine Messkrafterzeugungseinrichtung (14, 15) aufweist, die dazu dient, den Tastkopf (8) bei einer Antastung eines Werkstücks mit konstanter Messkraft zu beaufschlagen.

21. Messvorrichtung nach Anspruch 1, **dadurch gekennzeichnet, dass** das Messsystem (19) durch ein Längenmesssystem, insbesondere ein inkrementales Auflichtmesssystem, gebildet ist.

22. Messvorrichtung nach Anspruch 1, **dadurch gekennzeichnet, dass** die Steuerungseinrichtung (21) ferner Eingabemittel (23) zur Eingabe von Befehlen oder Daten sowie Ausgabemittel (22) zur Ausgabe von Informationen aufweist.

23. Messvorrichtung nach Anspruch 1, **dadurch gekennzeichnet, dass** sie eine Signalisierungseinrichtung (62) aufweist, die dem Bediener den momentanen Staus der Entscheidungslogik (33) anzeigt.

24. Messvorrichtung nach einem der vorhergehenden Ansprüche, **dadurch gekennzeichnet, dass** sie ein Höhenmessgerät (1) mit einer Messsäule (3) aufweist, an der ein Messschlitten (4) in vertikaler Richtung positionierbar gelagert und geführt ist, an dem der Tastkopf (8) befestigt ist.

25. Messvorrichtung nach einem der Ansprüche 1 bis 23, **dadurch gekennzeichnet, dass** sie ein Koordinatenmessgerät (1') aufweist, bei dem der Tastkopf (8) in einer zweidimensionalen Messebene oder in einem dreidimensionalen Messraum positionierbar ist.

## Claims

1. Measuring device for conducting at least one-dimensional coordinate measurements on a workpiece in keeping with one of a plurality of measurement functions selectable by an operator
with a base body (3; 63, 64, 66), on which a measuring slide with a contact probe (8) is mounted to be longitudinally movable, wherein the measuring slide (4) can be moved manually towards the respective measuring position by an operator,
with a drive means (14), which has a motor connected for actuation to the measuring slide (4) in order to move this,
with a measuring system (19) for detecting the movement of the contact probe (8) and for emitting characteristic measurement signals (25) for this and
with a control means (21) for controlling a measurement sequence and for actuating the drive means (14), wherein the control means (21) has a processing means (31), which is arranged to accept measurement signals (25) delivered by the measuring system (19) and process and evaluate these in accordance with predefined logic rules in order to deliver a measured value identifying the position of the contact probe (8), wherein the logic rules include a decision logic (33), which serves:
to define from the measurement signals (25) a running speed (v) and a running direction of the measuring slide (4) in order to recognise therefrom a positioning of the measuring slide (4) that has just been performed by the operator,
to automatically detect from the running speed (v) and the running direction of the measuring slide (4) the end of a manual positioning in order to bring the contact probe into the necessary measuring position in contact with the measuring plane by motor power, and
to recognise from the measurement signals (25) the measurement function desired by the operator and activate this.

2. Measuring device according to claim 1, **characterised in that** the measurement functions include a probing of a plane, a bore or a shaft either in one direction or in the opposite direction in the direction of movement of the contact probe (8).

3. Measuring device according to claim 1, **characterised in that** the activation of the measurement function comprises an activation of a motorised probing of the workpiece as well as an acceptance of the current measured value and can additionally comprise the initiation of at least one of the following procedures: application of constant measuring pressure to the contact probe (8), acceptance of a series of consecutive measured values, storage, processing and/or display of the measured value or measured values.

4. Measuring device according to claim 1, **characterised in that** the decision logic (33) effects the automatic recognition and activation of a measurement function as a function of the measurement signals (25) identifying the movement or position of the contact probe (8) and of magnitudes derived therefrom, which include at least one of the magnitudes of direction of movement, sped of movement, path of movement and/or duration of movement of the contact probe (8).

5. Measuring device according to claim 4, **characterised in that** the decision logic (33) has a comparator logic (34) for comparing the detected or derived magnitudes with predetermined parameter values, which include minimum and maximum threshold values.

6. Measuring device according to claim 5, **characterised in that** the parameter values are adjustable.

7. Measuring device according to claim 5, **characterised in that** the processing means (31) is arranged to automatically adapt the parameter values as a function of at least one measurement function that has already been performed.

8. Measuring device according to claim 1, **characterised in that** the decision logic (33) comprises a logic, which serves:
- to compare the speed (v), at which the contact probe (8) is moved, with a first threshold value (vₘᵢₙ) identifying a minimum running speed,
- to detect the duration (T) of the running movement with at least one minimum running speed and compare it with a second threshold value (Tₘᵢₙ) identifying a minimum duration, and
- based on the result of the comparisons and the determined direction, in which the contact probe (8) is moved, to recognise a positioning of the contact probe and select and activate the suitable measurement function, including the direction of measurement.

9. Measuring device according to claim 8, **characterised in that** it has a measuring pressure generation means (14, 15) for applying a constant measuring pressure to the contact probe (8) and the decision logic (33) additionally comprises a logic, which serves:
- to determine a continuous reduction in running speed with a constant running direction,
- to compare the specific running direction of the contact probe (8) with the operating direction of the measuring pressure generation means (14, 15), and
- based on this, to determine whether a probing into a bore or onto a shaft is concerned and the direction in which the probing occurs.

10. Measuring device according to claim 1, **characterised in that** the decision logic (33) has a logic for recognising a short reversal of the running direction of the contact probe (8) attributable to the elasticity of the measuring device (1).

11. Measuring device according to claim 1, **characterised in that** the decision logic (33) has a logic for recognising a physically based vibration of the contact probe (8).

12. Measuring device according to claim 1, **characterised in that** the decision logic (33) has a logic for cancelling a measurement function recognition that is taking place as well as a logic for abandoning an activated measurement function.

13. Measuring device according to claim 1, **characterised in that** the decision logic (33) can be activated and deactivated by the operator.

14. Measuring device according to claim 1, **characterised in that** the contact probe (8) has a tactile probe element (9).

15. Measuring device according to claim 1, **characterised in that** the contact probe (8) has a contactless probing element.

16. Measuring device according to claim 1, **characterised in that** the measuring slide (4) has a gripping element (18; 18a, 18b, 18c) for manually moving the contact probe (8).

17. Measuring device according to claim 1, **characterised in that** the drive means (14) has an electric motor.

18. Measuring device according to claim 1 or 18?, **characterised in that** a coupling means (15) is provided in the power train between the drive means (14) and the contact probe (8) to create a non-positive connection between these until a predetermined torque is reached.

19. Measuring device according to claim 18, **characterised in that** the coupling means (14) is formed by a sliding clutch.

20. Measuring device according to claim 1, **characterised in that** it has a measuring pressure generation means (14, 15), which serves to apply constant measuring pressure to the contact probe (8) during probing of a workpiece.

21. Measuring device according to claim 1, **characterised in that** the measuring system (19) is formed by a length measuring system, in particular an incremental triangulation system.

22. Measuring device according to claim 1, **characterised in that** the control means (21) additionally has input elements (23) for the input of commands or data as well as output elements (22) for the output of information.

23. Measuring device according to claim 1, **characterised in that** it has a signalling means (62), which displays the instantaneous status? of the decision logic (33) to the operator.

24. Measuring device according to one of the preceding claims, **characterised in that** it has a height measurement device (1), on which the contact probe (8) is fastened, with a measuring pillar (3), on which a measuring slide (4) is mounted and arranged to allow positioning in vertical direction.

25. Measuring device according to one of claims 1 to 23, **characterised in that** it has a coordinate measuring device (1'), with which the contact probe (8) can be positioned in a two-dimensional measuring plane or in a three-dimensional measuring space.

## Revendications

1. Dispositif de mesure pour réaliser au moins des mesures de coordonnées dans une dimension sur une pièce à usiner, conformément à une fonction de mesure parmi plusieurs fonctions de mesure pouvant être sélectionnées par un utilisateur,
comprenant un corps de base (3; 63, 64, 66), sur lequel un chariot de mesure, portant un palpeur (8), est monté avec possibilité de translation longitudinale, le chariot de mesure (4) pouvant être déplacé manuellement par un utilisateur en direction de la position de mesure respective,
comprenant un dispositif d'entraînement (14) qui présente un moteur, lequel est relié du point de vue entraînement au chariot de mesure (4), afin de déplacer celui-ci en translation,
comprenant un système de mesure (19) pour détecter le mouvement du palpeur (8) et pour émettre des signaux de mesure (25) caractérisant celui-ci, et
comprenant un dispositif de commande (21) pour commander une séquence de mesure et pour activer le dispositif d'entraînement (14), le dispositif de commande (21) comportant un dispositif de traitement (31) qui est conçu pour recueillir les signaux de mesure (25) fournis par le système de mesure (19) et les traiter et exploiter selon des règles logiques prédéterminées, en vue de fournir une valeur mesurée caractérisant la position du palpeur (8), les règles logiques contenant une logique de décision (33) qui sert à
déterminer, à partir des signaux de mesure (25), une vitesse de déplacement (v) et un sens de déplacement du chariot de mesure (4), afin d'en déduire un positionnement du chariot de mesure (4) qui est en cours d'exécution manuelle par l'utilisateur,
détecter automatiquement, à partir de la vitesse de déplacement (v) et du sens de déplacement du chariot de mesure (4), l'achèvement d'un positionnement manuel, afin d'amener le palpeur à l'aide d'un moteur dans la position de mesure nécessaire et en contact avec le plan de mesure, et
identifier, à partir des signaux de mesure (25), la fonction de mesure souhaitée par l'utilisateur et à la déclencher.

2. Dispositif de mesure selon la revendication 1, **caractérisé par le fait que** les fonctions de mesure englobent un palpage d'un plan, d'un alésage ou d'un arbre, soit dans un sens, soit dans le sens opposé, le long de la direction de mouvement du palpeur (8).

3. Dispositif de mesure selon la revendication 1, **caractérisé par le fait que** le déclenchement de la fonction de mesure comporte un déclenchement d'un palpage commandé par moteur de la pièce à usiner, ainsi qu'une prise en compte de la valeur mesurée actuelle, et peut comporter en outre le déclenchement d'au moins un des processus suivants : application d'une force de mesure constante au palpeur (8); prise en compte d'une série de valeurs mesurées successives; mise en mémoire, traitement et/ou visualisation de la valeur mesurée ou des valeurs mesurées.

4. Dispositif de mesure selon la revendication 1, **caractérisé par le fait que** la logique de décision (33) effectue la détection et le déclenchement automatiques d'une fonction de mesure, en fonction des signaux de mesure (25) caractérisant le mouvement ou la position du palpeur (8) et de grandeurs qui en sont dérivées et comprennent au moins une des grandeurs parmi le sens de mouvement, la vitesse de mouvement, la distance de mouvement et/ou la durée de mouvement du palpeur (8).

5. Dispositif de mesure selon la revendication 4, **caractérisé par le fait que** la logique de décision (33) présente une logique de comparaison (34) pour comparer les grandeurs détectées ou dérivées avec des valeurs de paramètres prédéfinies, qui comprennent des valeurs seuils minimales et maximales.

6. Dispositif de mesure selon la revendication 5, **caractérisé par le fait que** les valeurs de paramètres sont réglables.

7. Dispositif de mesure selon la revendication 5, **caractérisé par le fait que** le dispositif de traitement (31) est conçu pour adapter automatiquement les valeurs de paramètres, en fonction d'au moins une fonction de mesure déjà exécutée.

8. Dispositif de mesure selon la revendication 1, **caractérisé par le fait que** la logique de décision (33) comprend une logique qui sert à :
- comparer la vitesse (v), avec laquelle le palpeur (8) est déplacé, avec une première valeur seuil (vₘᵢₙ) caractérisant une vitesse de déplacement minimale,
- déterminer la durée (T) du mouvement de déplacement avec au moins une vitesse de déplacement minimale et la comparer avec une deuxième valeur seuil (Tₘᵢₙ) caractérisant une durée minimale,
- détecter, sur la base du résultat des comparaisons et du sens déterminé dans lequel le palpeur (8) est déplacé, un positionnement de la tête de mesure et sélectionner et déclencher la fonction de mesure appropriée, y compris le sens de mesure.

9. Dispositif de mesure selon la revendication 8, **caractérisé par le fait qu'**il présente un dispositif générateur de force de mesure (14, 15), destiné à appliquer une force de mesure constante à la tête de mesure (8), et que la logique de décision comprend en outre une logique qui sert à :
- constater une réduction continue de la vitesse de déplacement, lorsque le sens de déplacement est le même,
- comparer le sens de déplacement déterminé du palpeur (8) avec le sens d'action du dispositif générateur de force de mesure (14, 15), et
- sur cette base, déterminer s'il s'agit d'un palpage dans un alésage ou sur un arbre, et dans quel sens le palpage a lieu.

10. Dispositif de mesure selon la revendication 1, **caractérisé par le fait que** la logique de décision (33) présente une logique pour détecter une brève inversion du sens de déplacement du palpeur (8), suite à une élasticité du dispositif de mesure (1).

11. Dispositif de mesure selon la revendication 1, **caractérisé par le fait que** la logique de décision (33) présente une logique pour détecter un rebond du palpeur (8), dû à une cause physique.

12. Dispositif de mesure selon la revendication 1, **caractérisé par le fait que** la logique de décision (33) présente une logique pour annuler une détection de fonction de mesure en cours, ainsi qu'une logique pour interrompre une fonction de mesure déclenchée.

13. Dispositif de mesure selon la revendication 1, **caractérisé par le fait que** la logique de décision (33) peut être activée et désactivée par l'utilisateur.

14. Dispositif de mesure selon la revendication 1, **caractérisé par le fait que** le palpeur (8) présente un élément de palpage (9) tactile.

15. Dispositif de mesure selon la revendication 1, **caractérisé par le fait que** le palpeur (8) présente un élément de palpage sans contact.

16. Dispositif de mesure selon la revendication 1, **caractérisé par le fait que** le chariot de mesure (4) présente un moyen de préhension (18; 18a; 18b; 18c) pour le déplacement manuel du palpeur (8).

17. Dispositif de mesure selon la revendication 1, **caractérisé par le fait que** le dispositif d'entraînement (14) présente un moteur électrique.

18. Dispositif de mesure selon la revendication 1 ou 18, **caractérisé par le fait qu'**un dispositif d'accouplement (15) est prévu dans la ligne de transmission entre le dispositif d'entraînement (14) et le palpeur (8), afin d'établir une liaison mécanique entre ces deux dispositifs, jusqu'à obtention d'un couple prédéterminé.

19. Dispositif de mesure selon la revendication 18, **caractérisé par le fait que** le dispositif d'accouplement (14) est constitué d'un accouplement à friction.

20. Dispositif de mesure selon la revendication 1, **caractérisé par le fait qu'**il présente un dispositif générateur de force de mesure (14, 15) qui sert à appliquer une force de mesure constante au palpeur (8), lors du palpage d'une pièce à usiner.

21. Dispositif de mesure selon la revendication 1, **caractérisé par le fait que** le système de mesure (19) est constitué d'un système de mesure de longueur, en particulier d'un système de mesure incrémental par réflexion.

22. Dispositif de mesure selon la revendication 1, **caractérisé par le fait que** le dispositif de commande (21) présente en outre des moyens d'introduction (23) pour entrer des instructions ou des données, ainsi que des moyens de sortie (22) pour sortir des informations.

23. Dispositif de mesure selon la revendication 1, **caractérisé par le fait qu'**il comporte un dispositif de signalisation (62) qui indique l'état momentané de la logique de décision (33) à l'utilisateur.

24. Dispositif de mesure selon une des revendications précédentes, **caractérisé par le fait qu'**il présente un appareil de mesure de hauteur (1) comprenant une colonne de mesure (3) sur laquelle est monté et guidé avec possibilité de positionnement dans le sens vertical un chariot de mesure (4) auquel est fixé le palpeur (8).

25. Dispositif de mesure selon une des revendications 1 à 23, **caractérisé par le fait qu'**il présente un appareil de mesure de coordonnées (1'), dans lequel le palpeur (8) peut être positionné dans un plan de mesure à deux dimensions ou dans un espace de mesure à trois dimensions.
